# EUROPÄISCHE PATENTSCHRIFT

(11) **EP 1 186 879 B1**
(45) Veröffentlichungstag und Bekanntmachung des Hinweises auf die Patenterteilung: **29.10.2003**
(21) Anmeldenummer: 01119498.2
(22) Anmeldetag: 14.08.2001
(51) Int. Cl.: G01N 1/28

(54) **Verfahren und Vorrichtung zur Laser-Mikrodissektion**
Method and device for Laser Microdissection
Procédé et dispositif de microdissection laser

(30) Priorität: 01.09.2000 DE 10043506
(43) Veröffentlichungstag der Anmeldung: 13.03.2002
(73) Patentinhaber: Leica Microsystems Wetzlar GmbH, 35578 Wetzlar (DE)
(72) Erfinder: Ganser, Michael, Dr., 35398 Giessen (DE); Weiss, Albrecht, Dr., 35440 Linden (DE); Wesner, Joachim, 65934 Frankfurt/Main (DE); Johannsen, Gerhard, 35435 Wettenberg (DE)
(74) Vertreter: Reichert, Werner F., Dr.

(56) Entgegenhaltungen:
- US-A- 5 998 129
- SCHUETZE K ET AL: "LASER MICROMANIPULATION SYSTEMS AS UNIVERSAL TOOLS IN CELLULAR AND MOLECULAR BIOLOGY AND IN MEDICINE" CELLULAR AND MOLECULAR BIOLOGY, CMB ASSOCIATIONS, NOISY-LE-GRAND, FR, Bd. 44, Nr. 5, Juni 1998 (1998-06), Seiten 735-746, XP001007402 ISSN: 0145-5680
- ISENBERG G ET AL: "CELL SURGERY BY LASER MICRO-DISSECTION: A PREPARATIVE METHOD" JOURNAL OF MICROSCOPY, OXFORD, GB, Bd. 107, Nr. 1, 1. Mai 1976 (1976-05-01), Seiten 19-24, XP000671562 ISSN: 0022-2720
- BOEHM M ET AL: "Microbeam-MOMeNT: Non-Contact Laser Microdissection of Membrane-Mounted Native Tissue" AMERICAN JOURNAL OF PATHOLOGY, PHILADELPHIA, PA, US, Bd. 151, Nr. 1, 1. Juli 1997 (1997-07-01), Seiten 63-67, XP002169793 ISSN: 0002-9440

## Beschreibung

Die Erfindung betrifft ein Verfahren zur Laser-Mikrodissektion interessierender Probenbereiche einer Probe, die auf einem Probenhalter aufgebracht ist.

Mit Mikrodissektion wird im Bereich der Biologie und der Medizin ein Verfahren bezeichnet, mit dem aus einer im allgemeinen flachen Probe (beispielsweise Zellen oder ein Gewebeschnitt) ein kleines Stück mit einem feinen, fokussierten Laserstrahl ausgeschnitten wird. Das ausgeschnittene Stück steht damit für weitere biologische oder medizinische (z.B. histologische) Untersuchungen zur Verfügung.

Die WO 97/11156 beschreibt ein System zur Bereinigung von Zellkulturen. Es umfasst ein aufrechtes Mikroskop mit einem in das Mikroskop eingekoppelten Laserstrahl, vorzugsweise UV-Laserstrahl. Ungewünschte Zellkulturen eines Gewebedünnschnittes auf der Oberseite eines planaren Trägers werden mit dem fokussierten Laserstrahl weggebrannt. Die verbliebenen Zellen werden von dem Träger physikalisch abgelöst und zellbiologisch untersucht.

Die WO 97/29355 (bzw. die korrespondierende US 5,998,129) und die im wesentlichen wortgleiche WO 97/29354 beschreiben ein solches Verfahren und eine Vorrichtung zur Laser-Mikrodissektion. Die Probe ist auf einem festen, planen Träger angeordnet, beispielsweise einer polymeren Trägerfolie, die über einen laborüblichen Objektträger aus Glas gespannt ist. Das beschriebene Verfahren arbeitet in zwei Schritten. In einem ersten Schritt wird mit einem Laserstrahl ein interessierender Probenbereich, auf dem sich z.B. ein selektierter Zellverband oder ein histologischer Schnitt befindet, mit einem Laserstrahl ausgeschnitten. Die Schnittlinie des Laserstrahls beschreibt dazu eine geschlossene Kurve um den interessierenden Probenbereich. Nach dem Schnitt haftet der ausgeschnittene, interessierende Probenbereich dann noch an seinem Untergrund bzw. liegt auf dem Objektträger auf. Daher wird in einem zweiten Schritt ein zusätzlicher Laserschuss auf den interessierenden Probenbereich gerichtet und dadurch der interessierende Probenbereich in Richtung des Laserstrahls in ein Auffanggefäß geschleudert. Wegen des Herausschleuderns des ausgeschnittenen, interessierenden Probenbereichs wird daher das Verfahren in Fachkreisen kurz als "Laserkatapulting" bezeichnet.

Ein Nachteil des Verfahrens tritt schon beim ersten Verfahrensschritt auf. Kurz bevor die Schnittlinie geschlossen ist, ist das ausgeschnittene Objektfeld nur noch mit einem schmalen Steg mit der umgebenden Probe verbunden. Bedingt durch elektrische Aufladung oder durch mechanische Spannung im Steg, klappt in diesem Stadium des Schnitts der ausgeschnittene, interessierende Probenbereich häufig weg, d.h. aus der Fokusebene des Laserstrahls heraus oder hinter die verbleibende Trägerfolie. Eine Fertigstellung des Schnitts des weggeklappten, ausgeschnittenen Probenbereichs und ein Weitertransport mittels Laserschuss ist damit erschwert oder sogar unmöglich.

Ein weiterer Nachteil des Verfahrens liegt darin, dass in der Praxis für den zweiten Verfahrensschritt, den laserinduzierten Transport, der Laser defokussiert werden muss. Das heißt, das bei Laborarbeiten zum Entfernen jedes einzelnen ausgeschnittenen Objektfelds jedes Mal der Laser defokussiert werden muss (z.B. durch Höhenverstellung des die Probe tragenden Probentisches), der einzelne "Transport-Schuss" durchgeführt wird und danach zur weiteren Bearbeitung der Probe der Laser wieder fokussiert werden muss. Diese Vorgehensweise ist für den Anwender insbesondere bei Laboruntersuchungen mit einer Vielzahl von Schnitten umständlich und zeitraubend.

Es ist daher Aufgabe der Erfindung, ein Verfahren zur Laser-Mikrodissektion anzugeben, welches ein sicheres und komfortables Ausschneiden eines Objektfeldes aus einer Probe erlaubt.

Diese Aufgabe wird gelöst durch ein Verfahren zur Laser-Mikrodissektion interessierender Probenbereiche einer Probe, die auf einem Probenhalter aufgebracht ist, welches folgende Verfahrensschritte aufweist:
a) Schneiden mit einem fokussierten Laserstrahl mit einer definierten Schnittbreite entlang einer offenen, den interessierenden Probenbereich weitgehend umschließenden Schnittlinie, wobei zwischen Anfang und Ende der Schnittlinie ein stabiler Steg definierter Breite stehen bleibt, über den der interessierende Probenbereich mit der umgebenden Probe verbunden ist,
b) und Durchtrennen des Stegs mit einem einzigen, auf den Steg gerichteten Laserimpuls eines fokussierten Laserstrahls mit gegenüber dem vorausgegangenen Schneiden verbreiterter Schnittbreite, wobei nach dem Durchtrennen der interessierende Probenbereich durch Einwirkung der Schwerkraft herabfällt.

Bei diesem Verfahren erweist es sich als vorteilhaft, wenn die definierte Schnittbreite beim Schneiden deutlich schmaler ist als die Schnittbreite des Laserstrahls beim Durchtrennen des Stegs. Die definierte Schnittbreite beim Schneiden kann durch Abschwächung der Laserintensität gegenüber der Laserintensität beim Durchtrennen des Stegs erzeugt werden. in diesem Fall kann zum Durchtrennen des Stegs eine Laserimpuls mit voller Leistung des Lasers erzeugt werden.

Ebenso kann die Apertur des Laserstrahles mittels einer Blende verringert werden. Dadurch ändert sich die Schnittbreite des Laserstrahls auf der Probe. Als besonders wirkungsvoll erweist es sich, wenn die Schnittbreite des Laserstrahls beim Durchtrennen des Stegs mindestens der Breite des Stegs entspricht. Mit Vorteil wird der einzelne Laserimpuls auf die Mitte des Stegs gerichtet.

In einer vorteilhaften Ausgestaltung des erfindungsgemäßen Verfahrens wird eine Vorrichtung zur Laser-Mikrodissektion verwendet, welche ein sicheres Ausschneiden eines Objektfeldes aus einer Probe erlaubt und auf ein Defokussieren des Laserstrahls zum Abtransport der Probe verzichtet. Die Vorrichtung besteht aus einem Mikroskop, das mindestens ein eine optische Achse definierendes Objektiv aufweist, das zur Betrachtung einer Probe mit einem interessierenden Probenbereich dient, außerdem einem Laser, der einen Laserstrahl erzeugt, und mindestens einem optischen System, das den Laserstrahl in das Objektiv einkoppelt, und weist zusätzlich folgende Merkmale auf:
a) eine Schnittlinien-Steuerungseinheit, die dem Mikroskop zur Erzeugung einer Relativbewegung zwischen dem Laserstrahl und der Probe zugeordnet ist,
b) und Mittel zum Durchtrennen des Stegs, mit welchen die Schnittbreite des Laserstrahls vergrößert und ein einziger fokussierter Laserimpuls auf den Steg gerichtet wird.

Bisher galt es in Fachkreisen allgemein als unmöglich, einen ausgeschnittenen, interessierenden Probenbereich ohne Laserkatapulting aus einer Probe zu entfernen. Das erfindungsgemäße Verfahren bietet nun erstmals die Möglichkeit, einen interessierenden Probenbereich auszuschneiden und diesen ohne materialschädigenden Laserbeschuss von der Probe zu trennen.

Dazu wird das Laserschneiden der Probe in zwei Verfahrensschritten mit unterschiedlichen Laserparametern bzw. unterschiedlichen Schnittbreiten des Laserstrahls vorgenommen. Entscheidend hierfür ist eine geeignete Präparation der Proben. Dazu werden die zu untersuchenden Proben, aus denen interessierende Probenbereiche ausgeschnitten werden sollen, auf sehr dünne Kunststoff-Filme präpariert. Die Dicke dieser Kunststoff-Filme liegt in der Größenordnung zwischen 1 bis 2 µm. Es können beispielsweise PET-Filme verwendet werden. Die besten Schnittergebnisse wurden jedoch mit PEN-Filmen erzielt. Damit ist es möglich, einen schmalen und zugleich stabilen Steg zu erzeugen. Es hat sich als besonders günstig für das Verfahren erwiesen, wenn die Breite des Stegs ungefähr der drei- bis fünffachen Schnittbreite des Laserstrahls beim Schneiden entspricht. Die Kunststoff-Filme sind in bekannter Weise über einen Probenhalter gespannt. Dies kann z.B. ein laborüblicher Objektträger aus Glas sein. Andere Probenhalter (Form, Material) sind jedoch denkbar. Der Probenhalter liegt auf einem xy-Tisch auf, der es erlaubt, unterschiedliche Probenbereiche zu betrachten und schiedliche Probenbereiche zu betrachten und auszuwählen. Die Vorrichtung weist üblicherweise mindestens ein Behältnis zum Auffangen eines ausgeschnittenen, interessierenden Probenbereichs in der Nähe bzw. unterhalb der Probe auf.

Eine Ausführungsform der verwendeten Vorrichtung weist einen feststehenden Laserstrahl auf. Die Schnittlinien-Steuerungseinheit umfasst dabei einen verfahrbaren xy-Tisch, welcher beim Schneiden die Probe relativ zu dem feststehenden Laserstrahl bewegt. Dabei werden sehr hohe Anforderungen an die Positioniergenauigkeit des xy-Tisches gestellt, um eine exakte Schnittlinie und einen Steg geeigneter Breite zu erzeugen. Der xy-Tisch wird vorzugsweise motorisch verfahren.

In einer anderen Ausführungsform der Vorrichtung umfasst die Schnittlinien-Steuerungseinheit eine Laser-Scan-Einrichtung, welche beim Schneiden den Laserstrahl relativ zu einer feststehenden Probe bewegt. Dazu wird beim Schneiden der xy-Tisch mit dem aufliegenden Probenhalter und der Probe nicht verfahren. Die Schnittlinie entsteht ausschließlich durch Ablenken des Laserstrahls über die Probe.

Besonders vorteilhaft ist eine Ausführungsform der Vorrichtung, in welcher dem Laser eine Laser-Steuerungseinheit zugeordnet ist, welche die Betriebsparameter des Lasers steuert. Diese Betriebsparameter sind beispielsweise die Laser-Leistung, die Laser-Apertur, welche die Laser-Schnittbreite bestimmen. Zusätzlich kann eine Autofokusvorrichtung für den Laser vorgesehen sein, die für einen sauberen Schnitt eine sichere Fokussierung auch bei unterschiedlich dicken Proben sicherstellt.

In einer anderen vorteilhaften Ausführungsform ist dem Mikroskop ein Rechner zugeordnet, der zur Steuerung der Schnittlinien-Steuerungseinheit und der Laser-Steuerungseinheit eingesetzt wird. Dadurch ist eine Automatisierung des gesamten Verfahrens möglich.

In anderen Ausführungsformen der Vorrichtung sind Mittel zur Auswahl der Schnittlinie oder Mittel zur Auswahl der Schnittlinie und der Lage des Stegs durch einen Benutzer vorgesehen. Zusätzlich können Mittel zur Auswahl der Breite des Stegs und zur Auswahl der Lage des Stegs durch einen Benutzer vorgesehen sein. Durch diese Auswahlmöglichkeit kann der Benutzer vor dem Schneiden den richtigen interessierenden Probenbereich gezielt auswählen und zugleich wichtige Stellen der Probe vor Beschädigungen schützen. Indem der Benutzer beispielsweise die Schnittlinie auf unkritische Zellstrukturen der Probe legen kann, werden kritische, interessierende Zellstrukturen innerhalb des interessierenden Probenbereichs beim Schneiden geschützt.

In einer weiteren Ausführungsform sind dem Mikroskop Mittel zu automatischen Vergrößerung der Schnittbreite des Laserstrahls und zur automatischen Durchführung eines einzelnen, auf den Steg gerichteten Laserimpulses mit dieser Schnittbreite zugeordnet.

Das erfindungsgemäße Verfahren besitzt den Vorteil, dass ein Wegklappen des interessierenden Probenbereichs beim Schneiden ausgeschlossen ist. Dadurch ist ein problemloses Schneiden der Probe möglich. Außerdem ist mit dem Durchtrennen des Stegs zugleich eine zuverlässige Trennung des ausgeschnittenen, interessierenden Probenbereichs von der Probe möglich. Der ausgeschnittene, interessierende Probenbereich braucht dann nur noch aufgefangen werden. Eine Automatisierung des Verfahrens und der Vorrichtung ermöglicht einen Einsatz im routinemäßigen Laborbetrieb.

Der wesentliche Vorteil des Verfahrens besteht jedoch darin, dass sowohl das Schneiden als auch das Durchtrennen des Stegs mit einem auf die Schnittlinie bzw. den Steg fokussierten Laserstrahl erfolgt. Dadurch ist der von der Schnittlinie umschlossene, interessierende Probenbereich während beider Verfahrensschritte vor möglicher Schädigung durch Laserbestrahlung geschützt. Auf diese Weise wird gegenüber bisher bekannten Verfahren keine Laserstrahlung auf den interessierenden Probenbereich gerichtet. Dies ist gerade bei biologischen Proben ein sehr wichtiger Aspekt, da auf diese Weise strahlungsbedingte Veränderungen der Zellstrukturen oder der genetischen Informationen innerhalb des interessierenden Probenbereichs ausgeschlossen sind. Für den Laborbetrieb erweist sich außerdem als vorteilhaft, dass das erfindungsgemäße Verfahren ohne wiederholtes und damit zeitraubendes Fokussieren und Defokussieren arbeitet.

Die Erfindung wird nachfolgend anhand der schematischen Zeichnung genauer beschrieben. Es zeigen:
- ***Fig. 1***:: eine Vorrichtung zum Laserschneiden mit einem feststehenden Laserstrahl;
- ***Fig. 2***:: eine Probe mit einer erfindungsgemäßen Schnittführung um einen interessierenden Probenbereich;
- ***Fig.3***:: eine Vorrichtung zum Laserschneiden mit einem beweglichen Laserstrahl.

In den Figuren sind gleiche Vorrichtungselemente mit denselben Bezugsziffern bezeichnet.

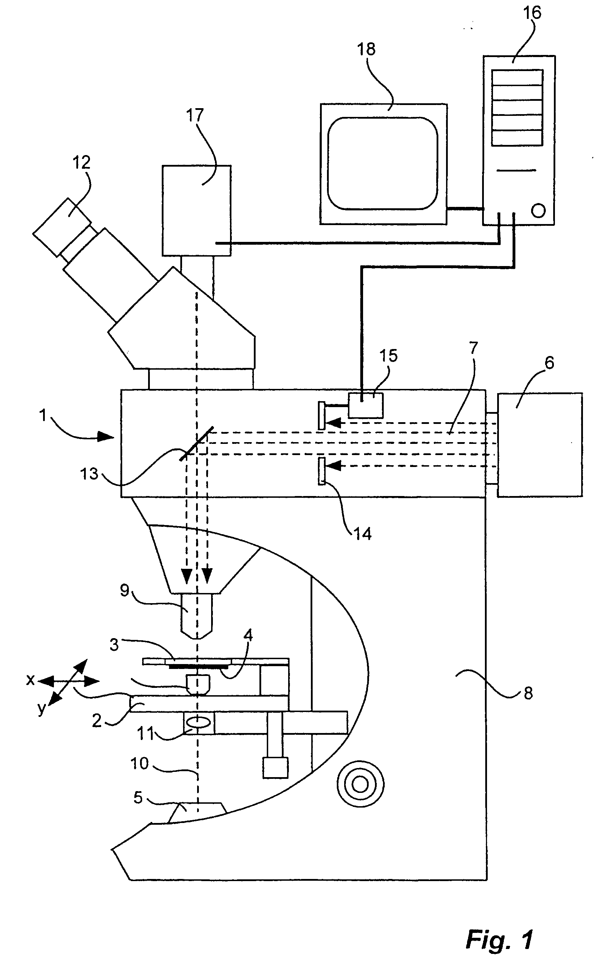

In ***Fig. 1*** ist eine Vorrichtung zum Laserschneiden dargestellt, welche mit einem feststehenden Laserstrahl und einer relativ dazu bewegten Probe arbeitet. Sie weist ein Mikroskop 1 mit einem motorisch verfahrbaren xy-Tisch 2 auf. Der xy-Tisch 2 dient zur Aufnahme eines Probenhalters 3, auf dem eine zu untersuchende bzw. zu schneidende Probe 4 ist aufgebracht ist. Ferner ist ein Beleuchtungssystem 5 sowie ein Laser 6 vorgesehen, der einen Laserstrahl 7 erzeugt, der zum Schneiden der Probe 4 auf diese fokussiert wird. Der xy-Tisch 2 dient als Schnittlinien-Steuerungseinheit und erzeugt während des Schneidvorgangs eine Relativbewegung zwischen dem Laserstrahl 7 und der Probe 4.

Bei dem dargestellten Mikroskop 1 handelt es sich um ein Durchlicht-Mikroskop, bei dem das Beleuchtungssystem 5 an einem Mikroskopstativ 8 unterhalb des xy-Tisches 2 und der Probe 4 angeordnet ist. Mindestens ein Objektiv 9 des Mikroskops 1 ist oberhalb des xy-Tisches 2 und der Probe 4 angeordnet. Das Objektiv 9 definiert eine optische Achse 10, die mit der optischen Achse des Beleuchtungssystems 5 fluchtet.

In dieser beschriebenen Anordnung wird die Probe 4 mit einer Durchlicht-Beleuchtung betrachtet. Das Laserschneiden könnte ebenso auch mit einem inversen Mikroskop ausgeführt werden, bei dem das Beleuchtungssystem 5 oberhalb des xy-Tisches 2 und das mindestens eine Objektiv 9 unterhalb des xy-Tisches 2 angeordnet ist.

Das von dem Beleuchtungssystem 5 ausgestrahlte Licht wird durch einen Kondensor 11 von unten auf den auf dem xy-Tisch 2 angeordneten Probenhalter 3 mit der Probe 4 gerichtet. Das die Probe 4 durchdringende Licht gelangt zum Objektiv 9 des Mikroskops 1. Innerhalb des Mikroskops 1 wird das Licht über nicht dargestellte Linsen und Spiegel mindestens einem Okular 12 des Mikroskops 1 zugeleitet, durch welches ein Bediener die auf dem xy-Tisch 2 angeordnete Probe 4 betrachten kann.

Im Mikroskopstativ 8 des Mikroskops 1 ist ein optisches System 13 in der optischen Achse 10 des Objektivs 9 vorgesehen. Das optische System 13 kann z.B. ein dichromatischer Teiler sein. Ferner ist es denkbar, dass das optische System 13 aus mehreren optischen Bauteilen besteht. Dies ist dann der Fall, wenn der Laserstrahl 7 mehrfach umgelenkt werden muss. Ferner ist im Laserstrahl 7 eine Blende 14 vorgesehen, mit welcher der Durchmesser des Laserstrahls 7 in entsprechender Weise beschränkt werden kann. Die Blende 14 kann z.B. als eine Festblende ausgebildet sein. In einer vorteilhaften Ausführungsform können mehrere Festblenden 14 auf einer Revolverscheibe oder einem Linearschieber angeordnet sein, um eine dieser Festblenden als die jeweils erforderliche Blende 14 in den Strahlengang einzubringen. Das Einbringen in den Laserstrahl 7 kann manuell durch den Benutzer oder motorisch durchgeführt werden.

In der hier dargestellten Ausführungsform ist die Blende 14 als eine Varioblende, beispielsweise als eine Irisblende, ausgebildet, deren Durchmesser über einen Blenden-Motor 15 gesteuert wird. Der Blenden-Motor 15 erhält von einem Rechner 16 die nötigen Steuersignale zum Einstellen des erforderlichen Blendendurchmessers.

Das Mikroskop 1 ist ferner mit einer Kamera 17 versehen, die ein Bild von der zu schneidenden Probe 4 aufnimmt. Dieses Bild ist auf einem Monitor 18 darstellbar, der mit dem Rechner 16 verbunden ist. Das System aus Rechner 16, Kamera 17 und Monitor 18 kann dazu verwendet werden, um den mit dem Laser 4 durchgeführten Schneidevorgang zu beobachten und zu überwachen. So kann der Rechner an den Laser Triggersignale zur Auslösung von Laserimpulsen und zur Steuerung der Laserleistung abgeben, den Blenden-Motor 15 ansteuern und eine (nicht dargestellte) Autofokuseinrichtung für den Laser 6 ansteuern.

Ferner kann auf dem Monitor 18 der auszuschneidende, interessierende Probenbereich der Probe 12 mittels eines Mauszeigers umfahren werden. Die Lage des Stegs kann durch eine Software im Rechner 16 automatisch bestimmt werden. Es erweist sich jedoch als vorteilhaft, wenn ein Benutzer auch die Lage des Stegs mittels Mausclick vorbestimmen kann. Entlang der so gekennzeichneten Schnittlinie wird dann der Schneidevorgang mittels des Laser 4 ausgeführt.

Unterhalb der Probe 4 ist mindestens ein Auffangbehältnis 19 zum Auffangen des ausgeschnittenen, interessierenden Probenbereichs angeordnet.

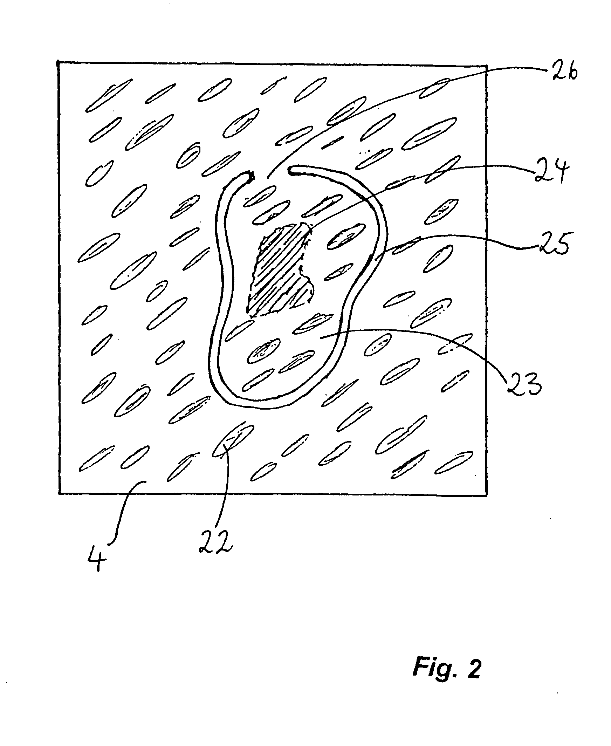

Anhand ***Fig. 2*** wird nachfolgend das erfindungsgemäße Verfahren beschrieben.

Dargestellt ist ein Kamerabild einer Probe 4 mit einer Vielzahl von Zellen 22. Ungefähr in der Mitte der Probe 4 liegt ein interessierender Probenbereich 23, in dem eine abweichende Zellstruktur 24, z.B. eine mutmaßliche Krebszelle oder eine Zelle mit einem interessierenden genetischen Code, liegt. Dieser interessierende Probenbereich 23 soll für weitere Untersuchungen aus der Probe 4 entnommen werden.

Dazu wird von einem Benutzer unter Benutzung einer entsprechenden Software mittels einer Computermaus im Kamerabild eine gewünschte Soll-Schnittlinie für den durchzuführenden Schneidvorgang markiert. Außerdem wird die gewünschte Lage des Stegs markiert. Die Breite des Stegs kann durch den Benutzer vorgegeben werden. Es besteht jedoch auch die Möglichkeit, die Stegbreite in Abhängigkeit von den aktuellen Laserparametern durch den Rechner 16 ermitteln zu lassen.

Entsprechend der aktuell eingestellten Schnittbreite des Laserstrahls 7 wird mit dem Rechner 16 zu der definierten Soll-Schnittlinie eine Anzahl von Sollpositionen des Laserstrahls 7 auf der Probe 4 berechnet, wobei die aneinander gereihten Sollpositionen des Laserstrahls 7 die gewünschte Soll-Schnittlinie ergeben. Lediglich für den definierten Steg wird nur eine zentrale Sollposition berechnet.

Zum Vorbereiten des Schneidvorgangs wird dann eine schmale Schnittbreite des Laserstrahls 7 eingestellt. Beim Schneiden wird dann der xy-Tisch 2 schrittweise so verfahren, dass der Laserstrahl 7 nacheinander an den berechneten Sollposition auf die Probe 4 auftrifft, wobei die Sollposition für den Steg 26 zunächst ausgelassen wird. In jeder Sollposition wird von dem Rechner 16 jeweils ein Triggersignal erzeugt, an den Laser 6 gesendet und von diesem entsprechend ein Laserimpuls abgestrahlt. Auf diese Weise wird mit dem Laser 6 um den interessierenden Probenbereich 23 die dargestellte, nicht geschlossene Schnittlinie 25 erzeugt. Der interessierende Probenbereich 23 ist dann nur noch durch den stabilen Steg 26 mit der umgebenden Probe 4 verbunden.

Zum Vorbereiten des Durchtrennens des Stegs 26 wird dann die Schnittbreite des Laserstrahls 7 deutlich verbreitert. Sie kann beispielsweise auf die maximal mögliche Schnittbreite eingestellt werden. Es hat sich allerdings als vorteilhaft erwiesen, wenn die Schnittbreite zum Durchtrennen des Stegs 26 an die Breite des Stegs 26 angepasst wird. Dazu muss die Schnittbreite mindestens der Breite des Stegs 26 entsprechen.

Im letzten Verfahrensschritt wird dieser Steg 26 mit einem auf seine Mitte gerichteten Laserimpuls durchtrennt. Dabei handelt es sich um einen Schneidvorgang mit einem einzelnen Laserimpuls, wobei der Laser 6 ebenso fokussiert bleibt wie bei dem vorangegangen Schneiden der Schnittlinie 25. Der auf diese Weise dissektierte, interessierende Probenbereich 23 fällt in ein darunter angeordnetes Auffanggefäß herab.

Da sowohl das Schneiden der Schnittlinie 25 als auch das Durchtrennen des Stegs 26 mit einem fokussierten Laserstrahl 7 erfolgt, ist der interessierende Probenbereich 23 während beider Verfahrensschritte vor möglicher Schädigung durch Laserbestrahlung geschützt.

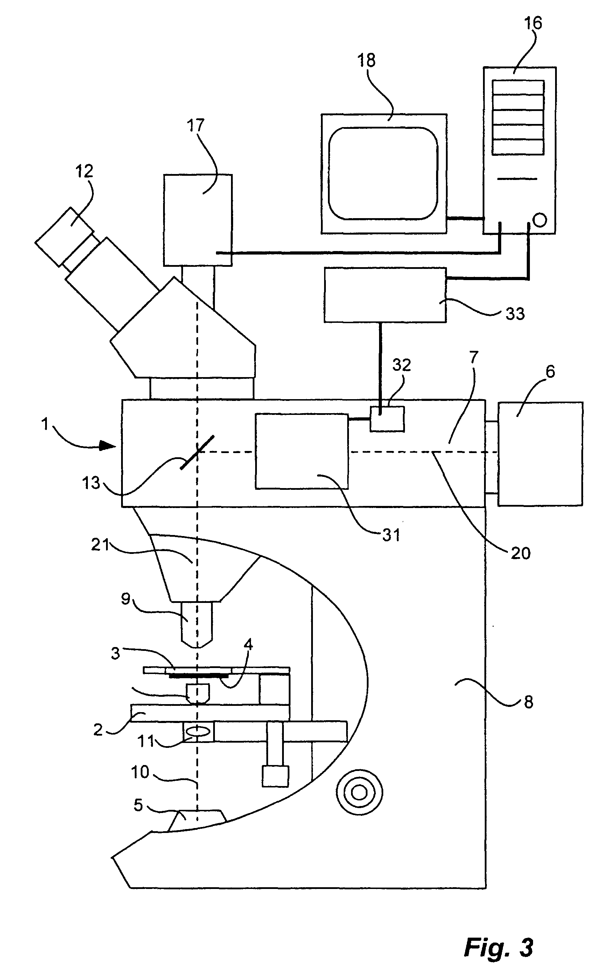

***Fig. 3*** zeigt ein erfindungsgemäßes Laser-Mikro-Dissektionsgerät zur Durchführung des erfindungsgemäßen Verfahrens, welches beim Schneiden einen Laserstrahl über eine festgehaltene Probe bewegt.

Das Laser-Mikro-Dissektionsgerät umfasst ein Mikroskop 1 mit einem verfahrbaren xy-Tisch 2, auf dem ein Probenhalter 3 angeordnet ist. An der Unterseite des Probenhalters 3 befindet sich eine zu schneidende Probe 4. Unter dem xy-Tisch 2 sind ein Beleuchtungssystem 5 und ein Kondensor 11 angeordnet, der die Probe 4 beleuchtet. Der xy-Tisch 2 wird während des Schneidvorgangs horizontal, also in x-Richtung und in y-Richtung, nicht verfahren. Unterhalb der Probe 4 ist mindestens ein Auffangbehältnis 19 zum Auffangen des ausgeschnittenen, interessierenden Probenbereichs angeordnet.

Von einem Laser 6, in diesem Beispiel ein UV-Laser, geht ein Laserstrahl 7 aus, der in einen Beleuchtungsstrahlengang 20 eingekoppelt wird. In dem Beleuchtungsstrahlengang 20 ist eine Laser-Scan-Einrichtung 31 angeordnet. Der Laserstrahl 7 durchläuft die Laser-Scan-Einrichtung 31 und gelangt über ein optisches System 13 zu einem Objektiv 9, das den Laserstrahl 7 auf die Probe 4 fokussiert. Das optische System 13 ist mit Vorteil als dichromatischer Teiler ausgeführt, durch den ein von der Probe 4 durch das Objektiv 9 ausgehender Abbildungsstrahlengang 21 zu mindestens einem Okular 12 gelangt.

Die Einstellung der Laser-Scan-Einrichtung 31 und damit die Verstellung des Laserstrahls 7 auf der Probe 4 erfolgt in dieser Ausführungsform mit einem der Laser-Scan-Einrichtung 31 zugeordneten Motor 32, einer Steuerungseinheit 33 und einem Rechner 16. Der Motor 32 ist mit der Steuerungseinheit 33 verbundenen, welche die Steuersignale zur Ansteuerung des Motors 32 liefert. Die Steuerungseinheit 33 ist mit dem Rechner 16 verbunden, an den ein Monitor 18 angeschlossen ist. Auf dem Monitor 18 wird das von einer Kamera 17 aufgenommene Bild der Probe 4 dargestellt. Mittels einer Rechner-Maus (nicht dargestellt) oder einer anderen beliebigen Cursorsteuerungseinrichtung kann auf dem Monitor 18 in dem Kamerabild eine gewünschte Soll-Schnittlinie definiert werden. Der Rechner 16 ist außerdem mit der Laserlichtquelle 6 verbunden und liefert diesem nur dann Triggersignale zum Auslösen von Laserimpulsen, wenn ein Schnitt durchgeführt wird.

Die Laser-Scan-Einrichtung 31 selbst dient als Schnittlinien-Steuerungseinheit, die während des Schneidvorgangs eine Relativbewegung zwischen dem Laserstrahl 7 und der Probe 4 erzeugt. Die Fokussierung des Laserstrahls 7 kann durch manuelles Verfahren des xy-Tisches 2 in der Höhe bei gleichzeitiger visueller Kontrolle des Kamerabildes durch einen Benutzer erfolgen. Bedienungsfreundlicher ist jedoch eine Ausführungsform der Vorrichtung, die eine Autofokus-Vorrichtung (nicht dargestellt) für den Laserstrahl 7 umfasst.

Durch Ansteuerung der Laser-Scan-Einrichtung 31 erscheint der Laserstrahl 7 am Ausgang der Laser-Scan-Einrichtung 31 unter verschiedenen Ablenkwinkeln. Dabei kann der Laserstrahl 7 durch Variation des Ablenkwinkels auf beliebige Positionen auf der Probe 4 geführt werden, die innerhalb des Sehfeldes des Objektivs 10 liegen.

In dem ersten Verfahrensschritt wird durch geeignete Ansteuerung der Laser-Scan-Einrichtung 31 mit einem Laserstrahl 7 mit geringer Schnittbreite auf der Probe 4 eine offene Schnittlinie erzeugt, wobei ein stabiler Steg 26 stehen bleibt. Dazu muss die schmale Schnittbreite vorher bereits eingestellt sein.

Die Schnittbreite eines Lasers in einer Probe hängt ab von den Laserparametern, wie z.B. Laserleistung und Apertur des Laserstrahls 7. Diese Schnittbreite wird vorher bestimmt oder ist in Abhängigkeit von den Laserparametern in einer Tabelle im Rechner 16 abgelegt. Entsprechend der aktuellen eingestellten Schnittbreite wird zu der definierten Soll-Schnittlinie eine Anzahl von Sollpositionen des Laserstrahls auf der Probe 4 berechnet, wobei die aneinander gereihten Sollpositionen des Laserstrahls 7 die gewünschte Soll-Schnittlinie ergeben.

Dann werden auf der Probe 4 nacheinander die Sollpositionen mit der Laser-Scan-Einrichtung 31 angefahren. Jedes Mal, wenn die Sollposition des Laserstrahls 7 auf der Probe 4 mittels der Laser-Scan-Einrichtung 31 vorbereitet bzw. eingestellt wurde, liefert der Rechner 16 Triggersignale zum Auslösen von Laserpulsen an die Laserlichtquelle 6. Auf diese Weise wird schrittweise die offene Schnittlinie erzeugt, wobei ein stabiler Steg stehen bleibt.

Als Vorbereitung zum Durchtrennen des Stegs wird dann die Schnittbreite des Laserstrahls 7 deutlich breiter eingestellt. Sie sollte jedoch mindestens der Breite des Stegs entsprechen. Der Laserstrahl 7 bleibt auch in diesem zweiten Verfahrensschritt fokussiert. Es wird zum Durchtrennen des Stegs nur ein einzelner Laserimpuls erzeugt, wobei der kurzzeitig erzeugte Laserstrahl 7 vorzugsweise auf die Mitte des Stegs gerichtet ist.

Nach dem Durchtrennen des Stegs ist der interessierende Probenbereich von der Probe 4 vollständig getrennt und fällt unter Einwirkung der Schwerkraft in das darunter angeordnete Auffangbehältnis.

Die vorliegende Erfindung ist in Bezug auf Ausführungsbeispiele beschrieben worden. Es ist jedoch für jeden auf diesem Fachgebiet tätigen Fachmann offensichtlich, dass Änderungen und Abwandlungen vorgenommen werden können, ohne dabei den Schutzbereich der nachstehenden Ansprüche zu verlassen.

### Bezugszeichenliste

- 1.: Mikroskop
- 2.: verfahrbarer xy-Tisch
- 3.: Probenhalter
- 4.: Probe
- 5.: Beleuchtungssystem
- 6.: Laser
- 7.: Laserstrahl
- 8.: Mikroskopstativ
- 9.: Objektiv
- 10.: optische Achse
- 11.: Kondensor
- 12.: Okular
- 13.: optisches System
- 14.: Blende
- 15.: Blenden-Motor
- 16.: Rechner
- 17.: Kamera
- 18.: Monitor
- 19.: Auffangbehältnis
- 20.: Beleuchtungsstrahlengang
- 21.: Abildungsstrahlengang
- 22.: Zellen
- 23.: interessierender Probenbereich
- 24.: abweichende Zellstruktur
- 25.: Schnittlinie
- 26.: Steg
- 31.: Laser-Scan-Einrichtung
- 32.: Motor für Laser-Scan-Einrichtung
- 33.: Steuerungseinheit

## Patentansprüche

1. Verfahren zur Laser-Mikrodissektion interessierender Probenbereiche (23) einer Probe (4), die auf einem Probenhalter (3) aufgebracht ist,
**gekennzeichnet durch** folgende Schritte:
a) Schneiden mit einem fokussierten Laserstrahl (7) mit einer definierten Schnittbreite entlang einer offenen, den interessierenden Probenbereich (23) weitgehend umschließenden Schnittlinie (25), wobei zwischen Anfang und Ende der Schnittlinie (25) ein stabiler Steg (26) definierter Breite stehen bleibt, über den der interessierende Probenbereich (23) mit der umgebenden Probe (4) verbunden ist,
b) und Durchtrennen des Stegs (26) mit einem einzigen, auf den Steg (26) gerichteten Laserimpuls eines fokussierten Laserstrahls (7) mit gegenüber dem vorausgegangenen Schneiden vergrößerter Schnittbreite.

2. Verfahren nach Anspruch 1, **dadurch gekennzeichnet**
**dass** die definierte Schnittbreite beim Schneiden deutlich schmaler ist als die Schnittbreite des Laserstrahls (7) beim Durchtrennen des Stegs (26).

3. Verfahren nach Anspruch 1, **dadurch gekennzeichnet**
**dass** die definierte Schnittbreite beim Schneiden durch Abschwächung der Laserintensität gegenüber der Laserintensität beim Durchtrennen des Stegs (26) erzeugt wird.

4. Verfahren nach Anspruch 1, **dadurch gekennzeichnet**
**dass** die Schnittbreite des Laserstrahls (7) beim Durchtrennen des Stegs (26) mindestens der Breite des Stegs (26) entspricht.

5. Vorrichtung zur Durchführung des Verfahrens nach einem der Ansprüche 1 bis 4, **gekennzeichnet durch**:
a) ein Mikroskop (1) mit mindestens einem eine optische Achse (10) definierenden Objektiv (9) zur Betrachtung einer Probe (4) mit einem interessierenden Probenbereich (23),
b) einen Laser (6), der einen Laserstrahl (7) erzeugt, und
c) mindestens ein optisches System (13), das den Laserstrahl (7) in das Objektiv (9) einkoppelt,
d) wobei dem Mikroskop (1) eine Schnittlinien-Steuerungseinheit (2; 31) zur Erzeugung einer Relativbewegung zwischen dem Laserstrahl (7) und der Probe (4) zugeordnet ist zur Erzielung einer offenen, den interessierenden Probenbereich (23) weitgehend umschließenden Schnittlinie (25), wobei zwischen Anfang und Ende der Schnittlinie (25) ein stabiler Steg (26) definierter Breite stehen bleibt, über den der interessierende Probenbereich (23) mit der umgebenden Probe (4) verbunden ist,
e) und wobei Mittel zum Durchtrennen des Stegs (26) vorgesehen sind, mit welchen die Schnittbreite des Laserstrahls (7) vergrößert und ein einziger fokussierter Laserimpuls auf den Steg (26) gerichtet wird, welcher den Steg (26) durchtrennt.

6. Vorrichtung zur Durchführung des Verfahrens nach Anspruch 5, **dadurch gekennzeichnet, dass** das Mikroskop (1) als ein aufrechtes Mikroskop ausgebildet ist.

7. Vorrichtung zur Durchführung des Verfahrens nach Anspruch 5, **dadurch gekennzeichnet, dass** das Mikroskop (1) als ein inverses Mikroskop ausgebildet ist.

8. Vorrichtung nach einem der Ansprüche 6 bis 7, **dadurch gekennzeichnet, dass** der Laserstrahl (7) feststehend ist und die Schnittlinien-Steuerungseinheit einen verfahrbaren xy-Tisch (2) umfasst, welcher beim Schneiden die Probe (4) relativ zu dem feststehenden Laserstrahl (7) bewegt.

9. Vorrichtung nach einem der Ansprüche 6 bis 7, **dadurch gekennzeichnet, dass** die Schnittlinien-Steuerungseinheit eine Laser-Scan-Einrichtung (31) umfasst, welche beim Schneiden den Laserstrahl (7) relativ zu einer feststehenden Probe (4) bewegt.

10. Vorrichtung nach einem der Ansprüche 6 bis 9, **dadurch gekennzeichnet, dass** dem Laser (6) eine Autofokusvorrichtung für den Laserstrahl (7) zugeordnet ist.

11. Vorrichtung nach einem der Ansprüche 6 bis 10, **dadurch gekennzeichnet, dass** dem Mikroskop Mittel zu automatischen Vergrößerung der Schnittbreite des Laserstrahls (7) und zur automatischen Durchführung eines einzelnen, auf den Steg (26) gerichteten Laserimpulses mit dieser Schnittbreite zugeordnet sind.

12. Vorrichtung nach einem der Ansprüche 6 bis 11, **dadurch gekennzeichnet, dass** Mittel zur Auswahl der Schnittlinie (25) durch einen Benutzer vorgesehen sind.

## Claims

1. Method for laser microdissection of specimen regions (23) of interest of a specimen (4) that is mounted on a specimen holder (3), **characterized by** the following steps:
a) cutting, with a focused laser beam (7) having a defined cut width, along an incomplete cut line (25) largely enclosing the specimen region (23) of interest, such that there remains between the beginning and end of the cut line (25) a stable web (26) of defined width by way of which the specimen region (23) of interest is joined to the surrounding specimen (4); and
b) severing the web (26) with a single laser pulse, directed onto the web (26), of a focused laser beam (7) having a cut width enlarged as compared to the previous cutting.

2. Method according to Claim 1, **characterized in that** the defined cut width during cutting is much narrower than the cut width of the laser beam (7) when severing the web (26).

3. Method according to Claim 1, **characterized in that** the defined cut width during cutting is generated by attenuating the laser intensity as compared to the laser intensity when severing the web (26).

4. Method according to Claim 1, **characterized in that** the cut width of the laser beam (7) when severing the web (26) corresponds at least to the width of the web (26).

5. Apparatus for carrying out the method according to one of Claims 1 to 4, **characterized by**
a) a microscope (1) having at least one objective (9) that defines an optical axis (10), for viewing of a specimen (4) having a specimen region (23) of interest,
b) a laser (6) that generates a laser beam (7), and
c) at least one optical system (13) that couples the laser beam (7) into the objective (9),
d) a cut line control unit (2; 31) being associated with the microscope (1) in order to generate a relative movement between the laser beam (7) and the specimen (4) to achieve an incomplete cut line (25) largely enclosing the specimen region (23) of interest, such that there remains between the beginning and end of the cut line (25) a stable web (26) of defined width by way of which the specimen region (23) of interest is joined to the surrounding specimen (4), and
e) means for severing the web (26), with which the cut width of the laser beam (7) is enlarged and a single focused laser pulse is directed onto the web (26) and severs the web (26), being provided.

6. Apparatus for carrying out the method according to Claim 5, **characterized in that** the microscope (1) is designed as an upright microscope.

7. Apparatus for carrying out the method according to Claim 5, **characterized in that** the microscope (1) is designed as an inverse microscope.

8. Apparatus according to either of Claims 6 and 7, **characterized in that** the laser beam (7) is stationary and the cut line control unit comprises a displaceable X-Y stage (2) which moves the specimen (4) relative to the stationary laser beam (7) during cutting.

9. Apparatus according to either of Claims 6 and 7, **characterized in that** the cut line control unit comprises a laser scanning device (31) which moves the laser beam (7) relative to a stationary specimen (4) during cutting.

10. Apparatus according to one of Claims 6 to 9, **characterized in that** an autofocus apparatus for the laser beam (7) is associated with the laser (6).

11. Apparatus according to one of Claims 6 to 10, **characterized in that** means for automatic enlargement of the cut width of the laser beam (7) and for automatic execution of a single laser pulse, directed onto the web (26), with that cut width are associated with the microscope.

12. Apparatus according to one of Claims 6 to 11, **characterized in that** means for selection of the cut line (25) by a user are provided.

## Revendications

1. Procédé de microdissection laser de zones d'échantillon intéressantes (23) d'un échantillon (4), qui est déposé sur un porte-échantillon (3), **caractérisé par** les étapes suivantes:
a) découpage avec un faisceau laser focalisé (7), avec une largeur de coupe définie le long d'une ligne de coupe ouverte (25), entourant largement la zone d'échantillon intéressante (23), dans laquelle il reste entre le commencement et la fin de la ligne de coupe (25) une languette stable (26) de largeur définie, par laquelle la zone d'échantillon intéressante (23) est attachée à l'échantillon (4) qui l'entoure,
b) et séparation de la languette (26) avec une seule impulsion laser dirigée vers la languette (26), d'un faisceau laser focalisé (7) avec une largeur de coupe élargie par rapport à la coupe précédente.

2. Procédé selon la revendication 1, **caractérisé en ce que** la largeur de coupe définie lors du découpage est sensiblement plus étroite que la largeur de coupe du faisceau laser (7) lors de la séparation de la languette (26).

3. Procédé selon la revendication 1, **caractérisé en ce que** la largeur de coupe définie lors du découpage est produite par une atténuation de l'intensité du laser par rapport à l'intensité du laser lors de la séparation de la languette (26).

4. Procédé selon la revendication 1, **caractérisé en ce que** la largeur de coupe du faisceau laser (7) lors de la séparation de la languette (26) correspond au moins à la largeur de la languette (26).

5. Dispositif pour la mise en oeuvre du procédé selon l'une quelconque des revendications 1 à 4, **caractérisé par**
a) un microscope (1), avec au moins un objectif (9) définissant un axe optique (10) pour l'observation d'un échantillon (4) avec une zone d'échantillon intéressante (23),
b) un laser (6), qui produit un faisceau laser (7), et
c) au moins un système optique (13), qui introduit le faisceau laser (7) dans l'objectif (9),
d) dans lequel une unité de commande de lignes de coupe (2; 31) est associée au microscope (1) pour la production d'un mouvement relatif entre le faisceau laser (7) et l'échantillon (4), en vue de produire une ligne de coupe ouverte (25) entourant largement la zone d'échantillon intéressante (23), en laissant subsister entre le commencement et la fin de la ligne de coupe (25) une languette stable (26) de largeur définie, par laquelle la zone d'échantillon intéressante (23) est attachée à l'échantillon (4) qui l'entoure,
e) et dans lequel il est prévu des moyens pour la séparation de la languette (26), avec lesquels la largeur de coupe du faisceau laser (7) est augmentée et une impulsion laser focalisée unique est dirigée vers la languette (26) et sépare la languette (26).

6. Dispositif pour la mise en oeuvre du procédé selon la revendication 5, **caractérisé en ce que** le microscope (1) est un microscope droit.

7. Dispositif pour la mise en oeuvre du procédé selon la revendication 5, **caractérisé en ce que** le microscope (1) est un microscope inverse.

8. Dispositif selon l'une quelconque des revendications 6 à 7, **caractérisé en ce que** le faisceau laser (7) est fixe et l'unité de commande de lignes de coupe comprend un plateau xy 2 mobile, qui déplace l'échantillon (4) par rapport au faisceau laser fixe (7) pendant la coupe.

9. Dispositif selon l'une quelconque des revendications 6 à 7, **caractérisé en ce que** l'unité de commande de lignes de coupe comprend un appareil de balayage laser (31), qui déplace le faisceau laser (7) par rapport à un échantillon fixe (4) pendant la coupe.

10. Dispositif selon l'une quelconque des revendications 6 à 9, **caractérisé en ce qu'**un dispositif de focalisation automatique pour le faisceau laser (7) est associé au laser (6).

11. Dispositif selon l'une quelconque des revendications 6 à 10, **caractérisé en ce que** des moyens pour l'augmentation automatique de la largeur de coupe du faisceau laser (7) et pour l'exécution automatique d'une impulsion laser unique ayant cette largeur de coupe et dirigée vers la languette (26) sont associés au microscope.

12. Dispositif selon l'une quelconque des revendications 6 à 11, **caractérisé en ce qu'**il est prévu des moyens de sélection de la ligne de coupe (25) par un utilisateur.
